# EUROPÄISCHE PATENTSCHRIFT

(11) **EP 1 253 269 B1**
(45) Veröffentlichungstag und Bekanntmachung des Hinweises auf die Patenterteilung: **15.06.2005**
(21) Anmeldenummer: 02006976.1
(22) Anmeldetag: 27.03.2002
(51) Int. Cl.: E05B 65/20, E05B 65/36, B60Q 1/24, E05B 17/10, B60Q 1/32

(54) **Aussenbetätigung für Fahrzeugschlösser von Türen, Klappen od. dgl.**
Exterior control for vehicle locks of doors, flaps, or similar
Commande extérieure des serrures de véhicules pour portes, clapets, ou similair

(30) Priorität: 28.04.2001 DE 10121046
(43) Veröffentlichungstag der Anmeldung: 30.10.2002
(73) Patentinhaber: Huf Hülsbeck & Fürst GmbH & Co. KG, 42551 Velbert (DE)
(72) Erfinder: Klein, Helmut, 42549 Velbert (DE)
(74) Vertreter: Mentzel, Norbert, Dipl.-Phys.

(56) Entgegenhaltungen:
- DE-A- 3 136 889
- DE-A- 19 617 038
- DE-A- 19 809 716
- DE-A- 19 822 733
- DE-A- 19 843 594
- US-A- 5 297 010

## Beschreibung

Die Erfindung richtet sich auf eine Außenbetätigung der im Oberbegriff des Anspruches 1 angegebenen Art. Die bügelförmige Handhabe kann von der Hand erfasst und betätigt werden. Dann gibt das Schloss die Tür frei, wenn es sich in einer entsicherten Position befand; die Tür wird geöffnet. Das Schloss kann aber auch in eine gesicherte Position überführt werden, was über einen Schließzylinder od. dgl. geschieht. Um das Arbeitsfeld der Außenbetätigung zeitweise auszuleuchten, verwendet man eine elektrisch betriebene Lichtquelle.

Bei der bekannten Außenbetätigung dieser Art (DE 31 36 889 C2) ist eine Lampe in einem Lampengehäuse angeordnet, welches neben einem Schließzylinder angeordnet ist. Von dort geht das Licht in ein nachgeschaltetes Prisma, welches ringartig das Stirnende des Schließzylinders umgibt. Diese bekannte Beleuchtung konnte sich wirtschaftlich nicht durchsetzen, weil dafür gesonderte elektrische Leitungen im Fahrzeug bis in den Schließzylinderbereich verlegt werden müssen und für die Anordnung des Lampengehäuses Platz und Befestigungsmittel vorgesehen sein müssen. Das ist aufwendig.

Bei einer Außenbetätigung ohne Beleuchtung ist es bekannt (WO 97/41322), einen kapazitiven Sensor in den Bügel der Handhabe zu integrieren, wodurch im Bereich der Handhabe ein elektrisches Feld aufgebaut wird. Ein Zugangsberechtigter besitzt einen Datenträger, der in Abstimmung mit den im Speicher des Fahrzeugs enthaltenen Daten codiert ist. Bei Annäherung des Zugangsberechtigten an die Handhabe wird das elektrische Feld verändert und eine Datenkommunikation ausgelöst. Nach erfolgreichem Datenvergleich wird das Schloss entsichert und die Tür kann über die Handhabe geöffnet werden.

Der Erfindung liegt die Aufgabe zugrunde, eine preiswerte Außenbetätigung der im Oberbegriff des Anspruches 1 genannten Art zu entwickeln, die raumsparend ist und zur richtigen Zeit für eine gute Ausleuchtung sorgt. Dies wird erfindungsgemäß durch die im Anspruch 1 angegebenen Maßnahmen erreicht, denen folgende besondere Bedeutung zukommt.

Die Erfindung nutzt nicht nur die Handhabe als Lampengehäuse zur Aufnahme der Lichtquelle, sondern auch die im Inneren der Handhabe ohnehin verlegten elektrischen Versorgungsleitungen als elektrischer Anschluss für die Lichtquelle. Die Lichtquelle ist mit in die Handhabe integriert. Man spart somit Platz für die Lichtquelle und für zusätzliche Lampenleitungen. Im Inneren der Handhabe ist nämlich ein Sensor eingebaut, der bereits an die Stromversorgung des Fahrzeugs angeschlossen ist. Bei Annäherung eines Zugangsberechtigten spricht der Sensor an und entsichert das Schloss, wofür eine entsprechende Elektronik im Bügelbereich vorgesehen ist. Die Erfindung nutzt schließlich auch diese Elektronik des Sensors auch zum Einschalten der Lichtquelle. Im Einschaltfall wird derjenige Raum der Handhabe ausgeleuchtet, der zum Eingriff der menschlichen Hand dient.

Damit dient die Handhabe als Träger zur Platzierung der Lichtquelle und die für den Sensor vorgesehene Elektrifizierung und Steuerung des Sensors wird zugleich für den Betrieb und für das Ein- und Ausschalten der Lichtquelle genutzt. Die erfindungsgemäßen Maßnahmen sind dadurch auf ein Minimum beschränkt, nämlich die Anordnung der Lichtquelle im Bügel und deren elektrische Anschlüsse.

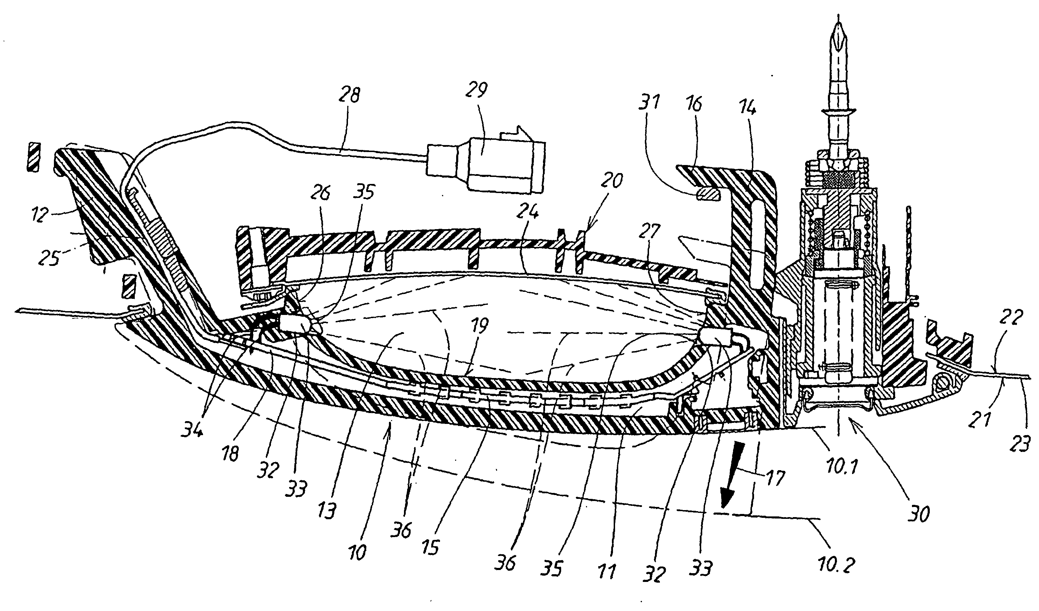

Weitere Maßnahmen und Vorteile der Erfindung ergeben sich aus den Unteransprüchen, der nachfolgenden Beschreibung und den Zeichnungen. In der Zeichnung ist die Erfindung in einem Ausführungsbeispiel dargestellt. Dort ist ein Längsschnitt durch die erfindungsgemäße Außenbetätigung gezeigt.

Die Außenbetätigung umfasst eine Handhabe 10, die an der Außenseite 21 einer Türverkleidung 23 zugänglich ist, einen an der Innenseite 22 der Türverkleidung 23 befestigten Träger 20 und einen neben der Handhabe 10 im Träger 20 integrierten Schließzylinder 30. Der Schließzylinder 30 dient nur im Notfall dazu, um bei Ausfall der im Fahrzeug vorgesehenen Elektronik ein nicht näher gezeigtes Türschloss aus einer Sicherungslage, wo eine Betätigung der Handhabe 10 unwirksam ist, in eine Entsicherungslage zu überführen, bei welcher über die Handhabe 10 das Schloss die Tür freigibt und dann die Tür geöffnet werden kann. Normalerweise dient zur Sicherung und Entsicherung des Schlosses eine Elektronik, die über einen Sensor 15 betätigt werden kann.

Im vorliegenden Fall besteht die Handhabe 10 aus einem bügelförmigen Ziehgriff. Dieser besitzt im Griffinneren 11 den Sensor 15, der kapazitiv wirksam ist. In der Handhabe 10 ist die erste Elektrode integriert, deren zweite Elektrode von den türseitigen Bereichen 24, z.B. einer dort vorgesehenen Griffmulde, gebildet wird, die ihren Halt im Träger 20 findet. Zwischen diesen beiden Elektroden entsteht ein elektrisches Feld, dessen Kapazität sich ändert, wenn die menschliche Hand in diesen Bereich gelangt. Dies wird von dem Sensor 15 festgestellt und bewirkt über eine Steuereinheit die geschilderte Umsteuerung des Schlosses.

Die Handhabe 10 ist mit ihrem einen Ende 12 am Träger 20 angelenkt, wobei die Gelenkachse in der Zeichnung mit 25 bezeichnet ist. Aufgrund einer nicht näher gezeigten Federbelastung wird die Handhabe 10 in ihrer ausgezogen gezeichneten Ruhestellung gehalten, die mit der Hilfslinie 10.1 gekennzeichnet ist. Zum Öffnen der Tür greift die menschliche Hand in den Bügelinnenraum 13, wobei es über den Sensor 15 zu der genannten Umsteuerung des Schlosses kommt. Die Hand umgreift dann den Bügel und zieht ihn in die gestrichelt in der Zeichnung angedeutete Betätigungsstellung 10.2. Es kommt zu einer Schwenkbewegung des Ziehgriffs 10 um die Gelenkachse 25. Am zweiten Ende 14 der Handhabe 10 befindet sich ein Schaft, der mit einem Mitnehmer 16 ein Glied 31 des Schlosses hintergreift. Bei der Betätigung 17 des Ziehgriffs 10 wird dieses Schlossglied 31 mitgenommen und bewirkt das genannte Öffnen der Tür.

Im Griffinneren 11 verlaufen mit 18 gekennzeichnete Versorgungs- und Steuerleitungen für den Sensor 15. Diese sind an ein elektrisches Kabel 28 angeschlossen, welches am Griffende 12 heraustritt und in einer Steckkupplung 29 endet. Die Steckkupplung 29 wird nach Installation der Außenbetätigung an komplementäre Steckteile in der Tür kontaktiert, die mit der Stromversorgung und der sonstigen Elektronik des Fahrzeugs elektrisch verbunden sind.

Bezogen auf den Bügelbogen 19 sind an den beiden Bügelenden 26, 27 zwei Bohrungen 32 vorgesehen, die zur Aufnahme zweier Lichtquellen 33 dienen. Diese bestehen aus kleinen Lämpchen, weshalb diese Bohrungen 32 die Funktion von Lampengehäusen haben. Die Lampenanschlüsse 34 sind an die elektrischen Leitungen 18 des Sensors 15 angeschlossen und werden über diese sowohl mit elektrischer Spannung versorgt, als auch über die Sensorelektronik ein- und ausgeschaltet. Die Lampen 33 nutzen also die Elektrifizierungen und Steuerungen, die ohnehin für den Sensor 15 vorgesehen sind.

Die Lichtaustrittsöffnungen 35 für die Lampen 33 weisen in den Bügelinnenraum 13 und liegen einander annähernd gegenüber. Wenn über die Sensorelektronik die Lampen 33 eingeschaltet sind, dann leuchten sie den gesamten Bügelinnenraum 13 aus, wie durch die Lichtpfeile 36 in der Zeichnung veranschaulicht ist. Der Raum zwischen dem Griff 14 und der Griffmulde 24 ist jetzt gut ausgeleuchtet. Der sich dem Fahrzeug nähernde Zugangsberechtigte, der über einen mit der Codierung in der Steuerung des Schlosses übereinstimmenden Datenträger bei sich führt, veranlasst diese Ausleuchtung 36. Der Zugangsberechtigte sieht auch im Dunkeln, an welche Stelle des Fahrzeugs er seine Hand zu setzen hat, um den Griff 10 zuverlässig zu erfassen und zu betätigen 17.

### Bezugszeichenliste:

- 10: bügelförmige Handhabe, Ziehgriff
- 10.1: Ruhestellung von 10
- 10.2: Betätigungsstellung von 10
- 1: Griffinneres von 10
- 12: erstes Griffende von 10
- 13: Bügelinnenraum von 10
- 14: zweites Griffende von 10
- 15: Sensor in 11
- 16: Mitnehmer an 14
- 17: Betätigungspfeil von 10
- 18: Versorgungs- und Steuerleitungen von 15 bzw. 33
- 19: Bügelbogen von 10
- 20: Träger für 10 und 30
- 21: Außenseite von 23
- 22: Innenseite von 23
- 23: Türverkleidung
- 24: Bereich von 23, Griffmulde
- 25: Gelenkachse von 10
- 26: erstes Bügelende von 19
- 27: zweites Bügelende von 19
- 28: Kabel für 18
- 29: Steckkupplung an 28
- 30: Schließzylinder
- 31: Schlossglied
- 32: Bohrung in 10 für 33
- 33: Lichtquelle, Lampe
- 34: Lampenanschlüsse von 33
- 35: Lichtaustrittsöffnung in 32
- 36: Lichtpfeil, Ausleuchtung von 13

## Patentansprüche

1. Außenbetätigung für Fahrzeugschlösser an Türen, Klappen od. dgl.
mit einer Handhabe (10) zum Öffnen der Tür, mit gegebenenfalls einem Schließzylinder (30) zum Sichern und Entsichern des Schlosses und mit wenigstens einer elektrischen Lichtquelle (33), die zeitweise das Arbeitsfeld der Außenbetätigung beleuchtet,
**dadurch gekennzeichnet ,**
**dass** ein elektrisch betriebener Sensor (15) im Inneren (11) der Handhabe (10) eingebaut und an die Stromversorgung (18, 28, 29) des Fahrzeugs angeschlossen ist,
**dass** der Sensor (15) bei Annäherung eines Zugangsberechtigten, der einen Datenträger bei sich hat, eine Datenkommunikation mit dem Datenträger auslöst und nach erfolgreichem Datenvergleich das Schloss entsichert,
**dass** eine Bohrung (32) in der Handhabe (10) als Gehäuse zur Aufnahme der Lichtquelle (33) dient,
**dass** die Lichtquelle (33) an die im Inneren (11) der Handhabe (11) verlegten elektrischen Versorgungsleitungen (18) des Sensors (15) angeschlossen ist
und **dass** die Elektronik des Sensors (15) zum Einschalten der Lichtquelle (33) dient.

2. Außenbetätigung nach Anspruch 1, **dadurch gekennzeichnet, dass** die Handhabe (10) aus einem bügelförmigen Ziehgriff besteht und zwei Lichtquellen (33) aufweist,
deren Aufnahmen (32) an den beiden Bügelenden (26, 27) angeordnet sind, deren Lichtaustrittsöffnungen (35) in den Bügelinnenraum (13) weisen und im Einschaltfall den Bügelinnenraum (13) ausleuchten (26).

3. Außenbetätigung nach Anspruch 1 oder 2, **dadurch gekennzeichnet, dass** der Sensor (15) kapazitiv wirksam ist.

## Claims

1. External actuating mechanism for vehicle locks on doors, hoods or the like
having a handle (10) for opening the door, with optionally a locking cylinder (30) for activating and deactivating the lock and with at least one electric light source (33) which temporarily illuminates the field of operation of the external mechanism,
**characterised in that**
an electrically operated sensor (15) is incorporated in the interior (11) of the handle (10) and is connected to the current supply (18, 28, 29) of the vehicle,
**in that**, at the approach of an authorised person carrying a data carrier, the sensor (15) initiates data communication with the data carrier and after successful comparison of data releases the lock,
**in that** a bore (32) in the handle (10) acts as a housing for receiving the light source (33),
**in that** the light source (33) is attached to the electrical supply lines (18) of the sensor (15) provided in the interior (11) of the handle (11)
and that the electronics of the sensor (15) serve to switch on the light source (33).

2. External actuating mechanism according to claim 1, **characterised in that** the handle (10) consists of a stirrup-shaped pull grip and has two light sources (33),
the bores (32) being arranged at the two stirrup ends (26, 27), the light discharge openings (35) thereof facing into the interior of the stirrup (13) and when switched on illuminating (26) the interior (13) of the stirrup.

3. External actuating mechanism according to claim 1 or 2, **characterised in that** the sensor (15) acts capacitively.

## Revendications

1. Commande extérieure des serrures de véhicule sur des portières, clapets ou analogues,
avec une manette (10) pour ouvrir la portière, avec, le cas échéant, un cylindre de fermeture (30) pour armer et désarmer la serrure, et au moins une source lumineuse (33) électrique, éclairant par moments le champ de travail de la commande extérieure,
**caractérisée en ce qu'**
un capteur (15) à fonctionnement électrique est intégré à l'intérieur (11) de la manette (10) et raccordé à l'alimentation électrique (18, 28, 29) du véhicule,
**en ce que** le capteur (15), à l'approche d'une personne autorisée à l'accès, ayant sur elle un support de données, déclenche une communication de données avec le support de données et désarme la serrure une fois réussie la comparaison des données,
**en ce qu'**un perçage (32), ménagé dans la manette (10), sert de boîtier pour loger la source lumineuse (33),
**en ce que** la source lumineuse (33) est raccordée aux lignes d'alimentation électrique (18), posées à l'intérieur (11) de la manette (10) du capteur (15),
et **en ce que** l'électronique du capteur (15) sert à la mise en service de la source lumineuse (33).

2. Commande extérieure selon la revendication 1, **caractérisée en ce que** la manette (10) est formée d'une poignée décorative en forme d'archet et présente deux sources lumineuses (33),
dont les logements (32) sont disposés sur les deux extrémités d'archet (26, 27), dont les ouvertures de sortie de lumière (35) sont tournées vers l'espace intérieur d'archet (13) et éclairent (26) l'espace intérieur d'archet (13) en cas de mise en service.

3. Commande extérieure selon la revendication 1 ou 2, **caractérisée en ce que** le capteur (15) agit de façon capacitive.
